# EUROPEAN PATENT APPLICATION

(11) **EP 3 761 392 A1**
(43) Date of publication of application: **06.01.2021**
(21) Application number: 19760652.8
(22) Date of filing: 11.01.2019
(51) Int. Cl.: H01M 2/10, B60L 50/40, B60L 50/50, B60L 53/00, B60L 55/00, B60L 58/00, H01M 2/20, H01M 10/44, H02J 7/00

(54) **BATTERY BLOCK, BATTERY PACK DEVICE, POWER SYSTEM, AND ELECTRICALLY DRIVEN VEHICLE**

(30) Priority: 27.02.2018 JP 2018033783
(71) Applicant: Murata Manufacturing Co., Ltd., Nagaokakyo-shi, Kyoto 617-8555 (JP)
(72) Inventor: KOKUBU, Taito, Nagaokakyo-shi, Kyoto 617-8555 (JP); NIHEI, Hirokatsu, Nagaokakyo-shi, Kyoto 617-8555 (JP)
(74) Representative: Witte, Weller & Partner Patentanwälte mbB
(86) International application number: PCT/JP2019/000647
(87) International publication number: WO 2019/167442

(57) **Abstract**

A battery pack device includes: a support body that supports a plurality of batteries arranged at least in one row; a coupling member that is provided on the support body and cooperate with another coupling member formed on a support body of another battery block to couple the battery blocks to each other; and a connection electrode that connects between electrodes exposed from the plurality of batteries. The coupling member is provided so as to locate at the same position after the battery block is rotated in the same plane. Further, the battery pack device is configured to switch between serial connection and parallel connection between the battery blocks according to whether the battery block is rotated or not.

## Description

### TECHNICAL FIELD

The present invention relates to a battery block, a battery pack device, a power system, and an electric vehicle.

### BACKGROUND ART

In recent years, the use of secondary batteries such as lithium-ion batteries is rapidly expanding to power storage devices for electric power storage combined with new energy systems such as solar cells and wind power generation, secondary batteries for automobiles, and the like. In order to serve these applications, a battery pack device in which a plurality of unit batteries (also referred to as unit cells or cells. In the following description, simply referred to as battery cells as appropriate) are connected in series or in parallel is used. The required output voltage value varies depending on the application. Therefore, conventionally, there has been proposed a battery pack device that can easily change an output voltage value (see Patent Documents 1 and 2).

For example, Patent Document 1 describes a battery pack device in which an output voltage is freely changed and adjusted to the required voltage of a vehicle which has the battery pack mounted. The battery pack in Patent Document 1 includes a holder case in which a plurality of batteries are accommodated in a parallel posture and end electrodes of the batteries are arranged on opposing surfaces, and an end plate fixed to the opposing surfaces of the holder case and arranged with bus bars coupled with the end electrodes of the batteries and formed by connecting the batteries in series or in parallel. The holder case and the end plate are divided into a plurality of sub cases and sub end plates so as to divide the long-side direction into a plurality of regions. In the battery pack of the vehicle power supply device, each of the divided sub end plates is fixed to two of the adjacent sub cases to couple the adjacent sub cases by the sub end plate. The output voltage value is changed according to the number of sub cases that are coupled.

Further, in Patent Document 2, the output voltage is changed according to the number of battery blocks connected in series, and a lateral width is freely adjusted according to the number of parallel units each forming the battery block to obtain an optimum outer shape. The battery pack is described. The battery pack according to Patent Document 2 has a battery core pack in which a plurality of battery blocks are coupled by lead plates and arranged linearly. The battery block includes three or more odd number of parallel units, and the parallel units are coupled in a horizontal row with a posture in which the long-side direction of each of the unit cells are oriented in the same direction. The parallel unit is formed by arranging the plurality of unit cells in parallel to each other and connecting the unit cells in parallel by lead plates connected to end surface electrodes at both ends of the unit cell. In the battery block, the adjacent parallel units are connected in series by the lead plates. In the battery block, the lead plate arranged at diagonal positions is bent in the middle, and the parallel units of the adjacent battery blocks are connected in series by connecting pieces on both sides of the bent portion.

### PRIOR ART DOCUMENTS

### PATENT DOCUMENTS

Patent Document 1: Japanese Patent Application Laid-Open No. 2010-033913
Patent Document 2: Japanese Patent Application Laid-Open No. 2011-216366

### SUMMARY OF THE INVENTION

### Problem to be solved by the invention

The device described in Patent Document 1 changes the output voltage value according to the number of coupled sub cases, and there is a problem that an output current cannot be changed even if the number of coupled sub cases is changed. Further, because the bus bar and the sub end plate for coupling are required for each sub case for connection, there is a problem that the number of components increases. The device described in Patent Document 2 also has a problem in that because the main object of the device is to make the outer shape appropriate, the output current cannot be changed.

Therefore, an object of the present invention is to provide a battery block, a battery pack device, a power system, and an electric vehicle which are capable of setting desired values for both output voltage and output current.

### Means for solving the problem

In order to solve the above problems, the present invention is a battery block including:
a plurality of batteries arranged in at least one row;
a support body that holds the plurality of batteries; and
a coupling member provided on the support body,
in which the coupling member is provided so as to cooperate with another coupling member formed on a support body of another battery block to couple the battery blocks to each other and so as to locate at the same position after the battery block is rotated in the same plane, and
in which the battery block is configured to switch between serial connection and parallel connection according to whether the battery block is rotated or not.

Further, the present invention is a battery pack device in which a plurality of the above battery blocks are provided, the adjacent battery blocks are coupled by the coupling members of the adjacent battery blocks, and connection electrodes are provided for connecting between electrodes of the plurality of batteries.

Moreover, the power system and the electric vehicle of the present invention include the above-described battery pack device.

### Advantageous effect of the invention

According to at least one embodiment, series connection or parallel connection of the battery pack device can be realized with a small number of components, and a desired output can be easily obtained. Note that the effects described here are not necessarily limited, and may be any one of the effects described in the present disclosure or effects different therefrom.

### BRIEF EXPLANATION OF DRAWINGS

FIG. 1A is a plan view used for schematically describing a battery pack device according to the present invention, and FIG. 1B is a connection diagram showing electrical connection of the battery pack device.
FIG. 2A is a top view used for describing the case of connecting two battery blocks in series according to the present invention, and FIG. 2B is a bottom view used for describing the case of connecting two battery blocks in series according to the present invention.
FIG. 3 is a connection diagram showing electrical connection when two battery blocks are connected in series.
FIG. 4A is a top view used for describing the case of connecting two battery blocks in parallel according to the present invention, and FIG. 4B is a bottom view used for describing the case of connecting two battery blocks in parallel according to the present invention.
FIG. 5 is a connection diagram showing electrical connection in the case of connecting two battery blocks parallel.
FIG. 6 is a perspective view of batteries and a battery pack holder.
FIG. 7A is a top view of one battery block, FIG. 7B is a top view of parallel connection, and FIG. 7C is a top view of series connection.
FIG. 8 is an exploded perspective view used for describing parallel connection.
FIG. 9 is a perspective view used for describing the battery pack device in parallel connection.
FIG. 10 is an exploded perspective view used for describing an example of the battery pack device in parallel connection. FIG. 11 is an exploded perspective view of the battery pack device in parallel connection shown in FIG. 10 as viewed from a different direction.
FIG. 12 is an exploded perspective view used for describing series connection.
FIG. 13 is a perspective view used for describing the battery pack device in series connection.
FIG. 14 is an exploded perspective view used for describing an example of a battery pack device in series connection. FIG. 15 is an exploded perspective view of the battery pack device in series connection shown in FIG. 14 as viewed from a different direction.
FIG. 16 is a perspective view showing an external appearance of the battery pack holder.
FIG. 17 is a top view showing two battery blocks to be connected in parallel.
FIG. 18 is a top view and a bottom view of the battery pack device in parallel connection.
FIG. 19 is a partial enlarged view used for describing coupling of the battery blocks.
FIG. 20 is a partial enlarged view used for describing escape of a mounting boss.
FIG. 21 is a partial enlarged view used for describing a modification of a coupling part.
FIG. 22 is a block diagram for describing an application example of the battery pack device of the present invention.
FIG. 23 is a block diagram for describing an application example of the battery pack device of the present invention.

### MODE FOR CARRYING OUT THE INVENTION

Hereinafter, the present invention is described with reference to the drawings. The description is given in the following order.
<1. Schematic description of the present invention>
<2. One embodiment of the present invention>
<3. Modification>
<4. Application examples>

The embodiments and the like described below are preferred specific examples of the present invention, and the contents of the present invention are not limited to these embodiments and the like. Further, the effects described in the present description are merely examples and are not limited, and there is no denying that there are effects different from the exemplified effects.

### <1. Schematic description of the present invention>

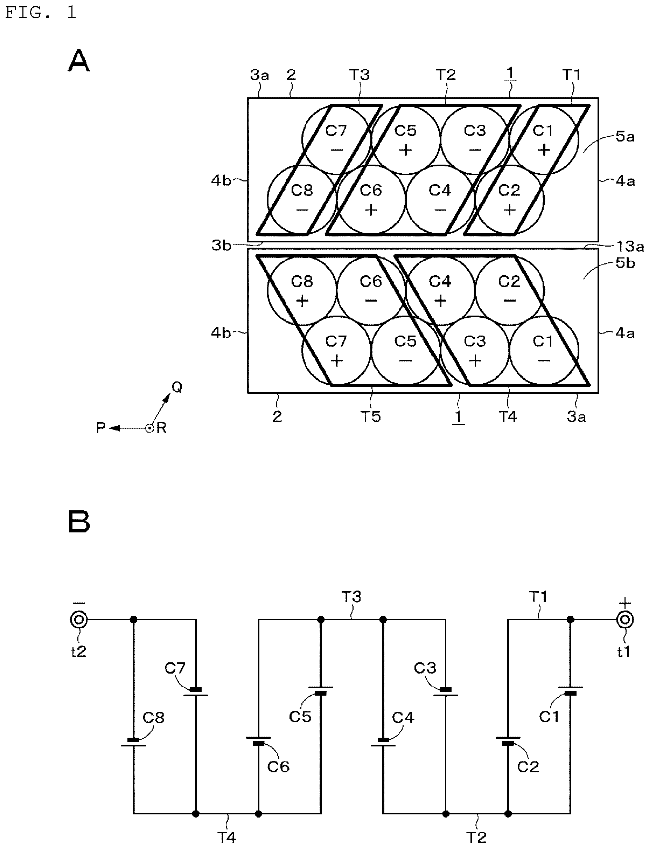

The battery pack device according to the present invention is schematically described with reference to FIGS. 1 to 5. The purpose of this description is to facilitate understanding of the present invention by reducing the number of batteries as compared with the embodiment and simplifying a configuration. FIG. 1A is a plan view and a bottom view of a battery block 1 having a configuration of the battery pack device and serving as a basic unit at the time of connection. Four batteries are arranged in two rows with respect to a battery pack holder 2 as a support body. Reference symbols C1 to C8 are attached to a total of eight batteries. The battery block 1 (battery pack holder 2) has a box shape as a whole, and has a first side surface 3a and a second side surface 3b, a first end surface 4a and a second end surface 4b, and a top surface 5a and a bottom surface 5b.

The batteries C1 to C8 are cylindrical secondary batteries. These batteries C1 to C8 are arranged in a bale stack, and the batteries C1, C3, C5, C7 are arranged in one row and the batteries C2, C4, C6, C8 are arranged in the other row. The electrodes (positive electrode + or negative electrode -) on the end surfaces of the batteries C1 to C8 are exposed from the top surface 5a and the bottom surface 5b. A long-side direction in an arrangement of the batteries C1 to C8 is defined as a P axis, a short-side direction in the arrangement as a Q axis, and a longitudinal direction of the batteries as an R axis. In the bale-stacked arrangement, the Q axis of the arrangement makes an angle of 120° (or 60°) with the P axis. The number of batteries forming one row is not limited, but the number is preferably even. By configuring one row with the even number of batteries, a polarity of the electrode exposed on the top surface at one end of the one row and a polarity of the electrode exposed on the top surface at the other end of the one row can be made different. As a result, by rotating the battery blocks by 180° as described later, the battery blocks can be easily connected in series or in parallel.

On the top surface 5a, a connection electrode T1 connects the positive electrodes of the batteries C1 and C2, a connection electrode T2 connects the negative electrodes of the batteries C3 and C4 and the positive electrodes of the batteries C5 and C6, and a connection electrode T3 connects the negative electrodes of the batteries C7 and C8. On the bottom surface 5b, a connection electrode T4 connects the negative electrodes of the batteries C1 and C2 and the positive electrodes of the batteries C3 and C4, and a connection electrode T5 connects the negative electrodes of the batteries C5 and C6 and the positive electrodes of the batteries C7 and C8. These connection electrodes T1 to T5 and connection electrodes to be described later are plate-shaped and made of metal having good conductivity, for example, copper.

As shown in FIG. 1B, the battery block 1 configured in this way has a connection configuration in which four of parallel connections of two batteries are connected in series (this is referred to as "2 parallel 4 series"). For example, if an output voltage of one battery is 3.5 [V] and an output current value is 3 [A], the output voltage value of the battery pack device is 3.5 × 4 = 14 [V], and the output current value is 3 × 2 = 6 [A].

### "Series connection"

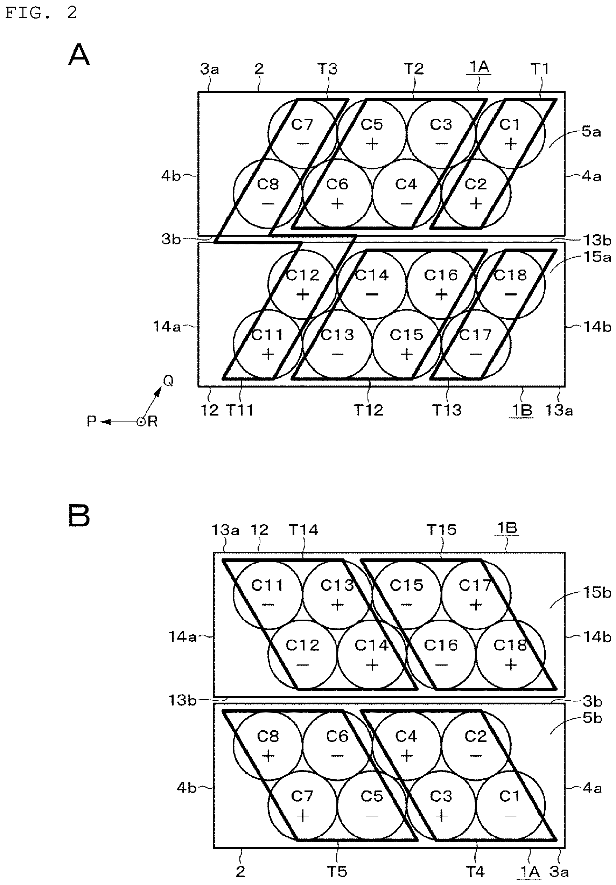

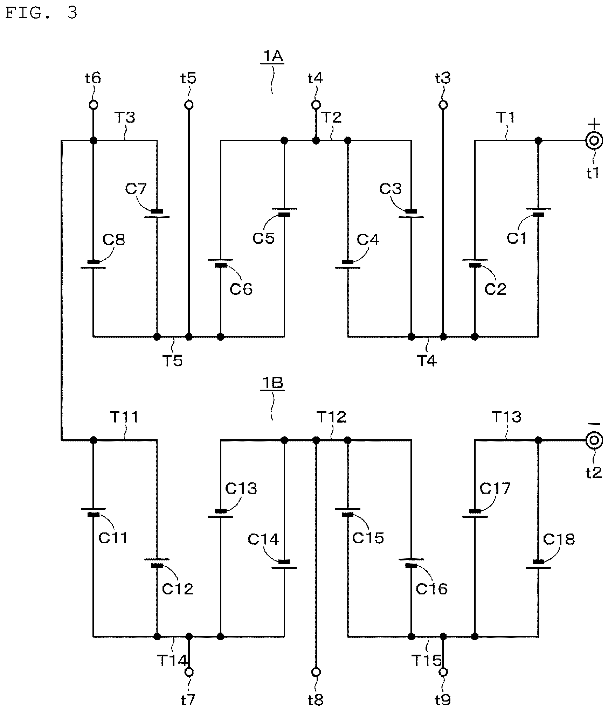

The battery block 1 serves as a basic unit, and the battery block 1 alone can be used. Further, because the batteries can be connected by the connection electrodes, the number of components can be reduced. Further, as shown in FIGS. 2 and 3, by coupling the two battery blocks 1A and 1B, a battery pack device in series connection with a "2 parallel 8 series" configuration can be realized.

FIG. 2A is a plan view showing a state in which the battery block 1B is coupled with the side surface of the battery block 1A, and FIG. 2B is a bottom view showing the state in which the battery block 1B is coupled with the side surface of the battery block 1A. As shown in FIGS. 2A and 2B, the battery block 1A has the same orientation as that of the battery pack device shown in FIG. 1A. On the other hand, the battery block 1B coupled with the battery block 1A is rotated by 180° on a plane defined by the P axis and the Q axis. That is, when the longitudinal direction R of the battery is vertical, the battery block 1B is in a state of being rotated by 180° about the vertical axis at the center.

The battery block 1B (battery pack holder 12) is box shaped similarly to the battery block 1A, and has side surfaces 13a and 13b, end surfaces 14a and 14b, a top surface 15a and a bottom surface 15b. The battery blocks 1A and 1B are coupled such that the side surface 13b of the battery block 1B faces the side surface 3b of the battery block 1A. The end surface 4a of the battery block 1A and the end surface 14b of the battery block 1B are on the same side, and the end surface 4b of the battery block 1A and the end surface 14a of the battery block 1B are on the same side.

On the top surface 5a of the battery block 1A, the connection electrode T1 connects the positive electrodes of the batteries C1 and C2, the connection electrode T2 connects the negative electrodes of the batteries C3 and C4 and the positive electrodes of the batteries C5 and C6, and the connection electrode T3 connects the negative electrodes of the batteries C7 and C8. On the top surface 15a of the battery block 1B, a connection electrode T11 connects the positive electrodes of batteries C11 and C12. Here, the connection electrode T3 and the connection electrode T11 form one sheet of connection electrode while interposing a coupling part therebetween. As a result, the battery blocks 1A and 1B are connected. Further, a connection electrode T12 connects the negative electrodes of batteries C13 and C14 and the positive electrodes of batteries C15 and C16, and a connection electrode T13 connects the negative electrodes of batteries C17 and C18.

Further, as shown in FIG. 2B, on the bottom surface 5b of the battery block 1A, the connection electrode T4 connects the negative electrodes of the batteries C1 and C2 and the positive electrodes of the batteries C3 and C4, and the connection electrode T5 connects the negative electrodes of the batteries C5 and C6 and the positive electrodes of the batteries C7 and C8. On the bottom surface 15b of the battery block 1B, a connection electrode T14 connects the negative electrodes of the batteries C11 and C12 and the positive electrodes of the batteries C13 and C14, and a connection electrode T15 connects the negative electrodes of the batteries C15 and C16 and the positive electrodes of the batteries C17 and C18.

As shown in FIG. 3, the battery pack device thus configured has a configuration in which "2 parallel 4 series" of the battery block 1A and "2 parallel 4 series" of the battery block 1B are connected in series, and the output voltage is taken out from output terminals t1 (positive electrode) and t2 (negative electrode). Further, FIG. 3 shows connection positions of the respective connection electrodes. For example, if the output voltage of one battery is 3.5 [V] and the output current value is 3 [A], the output voltage value of the battery pack device is 3.5 × 8 = 28 [V], and the output current value 3 × 2 = 6 [A].

Further, in the case of controlling the charging and discharging of the battery blocks 1A and 1B connected in series, the voltage between the output terminals t1 and t2 needs to be supplied to a control device and also the voltage value of each parallel connection needs to be supplied to the control device. In FIG. 3, t3, t4, t5, t6, t7, t8, and t9 are terminals for supplying the voltage between stages to the control device. These terminals t3 to t9 each has a lead part configuration in which a portion of the connection electrode is extended.

### "Parallel connection"

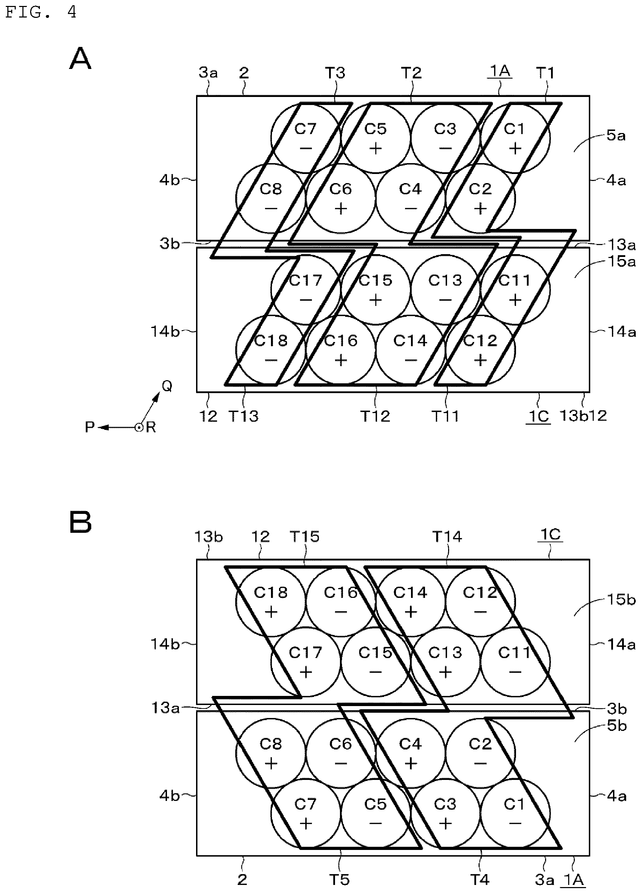

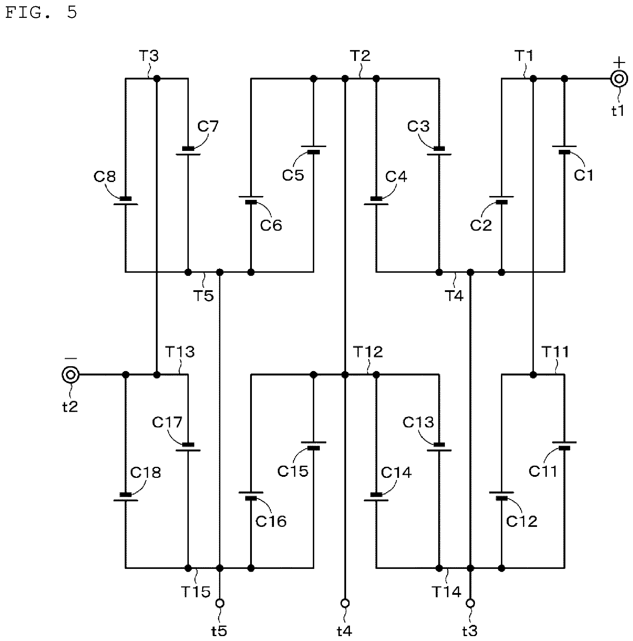

By coupling two battery blocks 1A and 1C as shown in FIGS. 4 and 5, a battery pack device in parallel connection with a "4 parallel 4 series" configuration can be realized. FIG. 4A is a plan view in a state in which the side surface 3b of the battery block 1A is coupled with the side surface 13a of the battery block 1C, and FIG. 4B is a bottom view in a state in which the side surface 3b of the battery block 1A is coupled with the side surface 13a of the battery block 1C. As shown in FIGS. 4A and 4B, both of the battery block 1A and the battery block 1C have the same orientation as the battery pack device shown in FIG. 1A, in which the end surfaces 4a and 14a are on the same side, and the end surfaces 4b and 14b are on the same side.

On the top surface 5a of the battery block 1A, the connection electrode T1 connects the positive electrodes of the batteries C1 and C2, the connection electrode T2 connects the negative electrodes of the batteries C3 and C4 and the positive electrodes of the batteries C5 and C6, and the connection electrode T3 connects the negative electrodes of the batteries C7 and C8. On the top surface 15a of the battery block 1C, the connection electrode T11 connects the positive electrodes of the batteries C11 and C12. Here, the connection electrode T1 and the connection electrode T11 form one sheet of connection electrode while interposing the coupling part therebetween. Further, the connection electrode T12 connects the negative electrodes of the batteries C13 and C14 and the positive electrodes of the batteries C15 and C16. Here, the connection electrode T2 and the connection electrode T12 form one sheet of connection electrode while interposing the coupling part therebetween. The connection electrode T13 connects the negative electrodes of the batteries C17 and C18. Here, the connection electrode T3 and the connection electrode T13 form one sheet of connection electrode while interposing the coupling part therebetween.

Further, as shown in FIG. 4B, on the bottom surface 5b of the battery block 1A, the connection electrode T4 connects the negative electrodes of the batteries C1 and C2 and the positive electrodes of the batteries C3 and C4, and the connection electrode T5 connects the negative electrodes of the batteries C5 and C6 and the positive electrodes of the batteries C7 and C8. On the bottom surface 15b of the battery block 1C, the connection electrode T14 connects the negative electrodes of the batteries C11 and C12 and the positive electrodes of the batteries C13 and C14. Here, the connection electrode T4 and the connection electrode T14 form one sheet of connection electrode while interposing the coupling part therebetween. Furthermore, the connection electrode T15 connects the negative electrodes of the batteries C15 and C16 and the positive electrodes of the batteries C17 and C18. Here, the connection electrode T5 and the connection electrode T15 form one sheet of connection electrode while interposing the coupling part therebetween.

The battery pack device thus configured has the "4 parallel 4 series" configuration as shown in FIG. 5, and the output voltage is taken out from the output terminals t1 (positive electrode) and t2 (negative electrode). Further, FIG. 5 shows the connection positions of the respective connection electrodes. For example, if the output voltage of one battery is 3.5 [V] and the output current value is 3 [A], the output voltage value of the battery pack device is 3.5 × 4 = 14 [V], and the output current value 3 × 4 = 12 [A] .

Further, in the case of controlling the charging and discharging of the battery blocks 1A and 1C connected in parallel, the voltage between the output terminals t1 and t2 needs to be supplied to the control device and also the voltage value of each parallel connection needs to be supplied to the control device. In FIG. 5, t3, t4, and t5 are the terminals for supplying the voltage between stages to the control device. These terminals t3 to t5 each has the lead part configuration in which a portion of the connection electrode is extended.

### <2. One embodiment of the present invention>

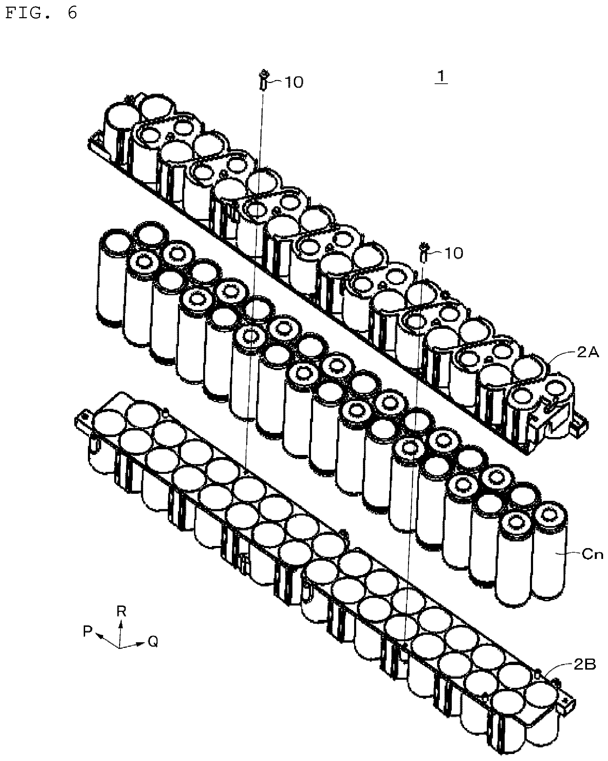

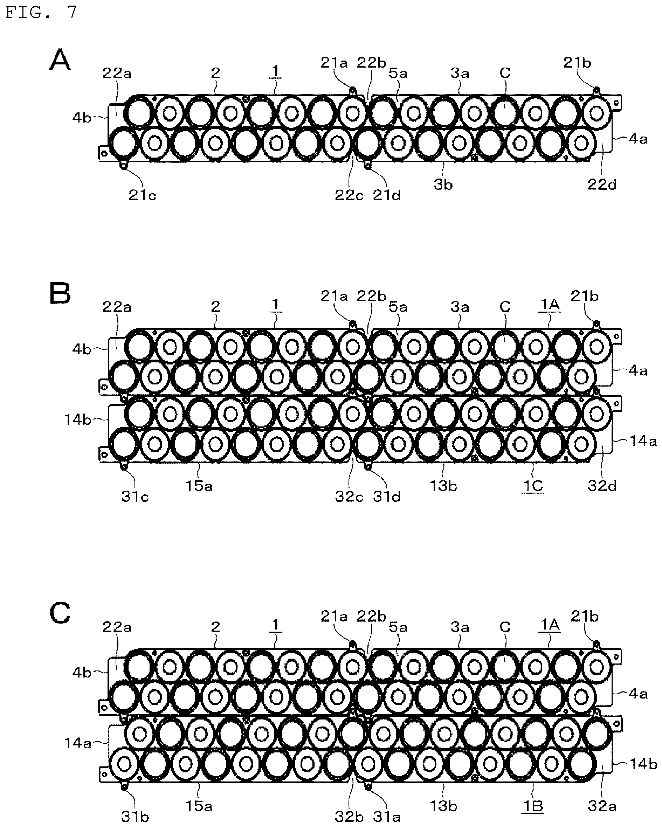

In one embodiment of the present invention, as shown in FIGS. 6 and 7A, the battery block 1 has a configuration in which 32 batteries C are arranged in two layers in the bale-stacked manner. The long-side direction of the arrangement of the batteries Cn is defined as the P axis, the short-side direction of the arrangement as the Q axis, and the longitudinal direction of the batteries as the R axis. The battery pack holder 2 is formed by combining an upper holder 2A and a lower holder 2B and fixing the two with fixing screws 10. In the bale-stacked arrangement, a direction that makes an angle of 120° with the P axis is defined as the Q axis. In the arrangement in which the batteries Cn are stacked with the P axis and the Q axis vertical with each other, unlike the bale-stacked arrangement, an angle of 90° with respect to the long-side direction is defined as the short-side direction.

The battery Cn is, for example, a cylindrical secondary battery, and is a lithium ion secondary battery. On the P axis of the battery arrangement of the battery block 1, the positive and negative poles of the end electrodes of the batteries Cn are alternately inverted, and on the Q axis, the positive and negative poles of the end electrodes of two adjacent batteries Cn are the same. However, in the present invention, the battery Cn is not limited to the lithium ion battery, and any other rechargeable secondary battery such as a nickel hydrogen battery, a nickel cadmium battery, or a lithium polymer battery can be used. Furthermore, the battery Cn is not limited to a cylindrical battery, and may be a prismatic battery.

The batteries Cn are stored in cylindrical storage parts formed in the battery pack holder 2 constituted of the upper holder 2A and the lower holder 2B. The upper holder 2A and the lower holder 2B are fixed by the fixing screws 10. The battery pack holder 2 is made of synthetic resin and is formed with circular openings of the same number as the number of the batteries Cn on the top surface and the bottom surface of the battery pack holder 2, and the end electrodes (positive electrode or the negative electrode) of the respective batteries are exposed through the openings. The number of batteries that constitutes the battery block 1 is not limited to 32.

As described with reference to FIG. 1A, regarding the battery block 1, by connecting the end electrodes of the batteries Cn by the connection electrodes, as shown in FIG. 7A, "2 parallel 16 series" battery pack device is constituted. A positive electrode output terminal is provided on the first end surface 4a where the positive electrode is exposed on the top surface, and a negative electrode output terminal is provided on the second end surface 4b where the negative electrode is exposed on the top surface. The connection electrode is a plate-like body made of material having electrical conductivity such as metal, for example, copper.

By connecting the plurality of battery blocks 1, a battery pack device having a larger output voltage value or a larger output current value can be configured. As an example, an example using two battery blocks is described. FIG. 7B shows the case in which the two battery blocks 1A and 1C are used to configure a battery pack device of a "4 parallel 16 series" configuration (this connection state is referred to as parallel connection). The battery arrangement and connection electrodes are the same as those shown in FIG. 4. Further, FIG. 7C shows the case in which the two battery blocks 1A and 1B are used to configure a battery pack device of "2 parallel 32 series" configuration (this connection state is referred to as series connection). The battery arrangement and connection electrodes are the same as those shown in FIG. 2.

In the case of parallel connection, the battery blocks 1A and 1C are coupled with the same orientation. That is, the battery blocks 1A and 1C are coupled in a manner in which the first end surface 4a of the battery block 1A and the first end surface 14a of the battery block 1C are located on the right side of FIG. 7B, and the second end surface 4b of the battery block 1A and the second end surface 14b of the battery block 1C are located on the left side of FIG. 7B. At this time, the positive electrodes are exposed on the top surface of the batteries C located at the end on the first end surface 4a side of the battery block 1A, and the negative electrodes are exposed on the top surface of the batteries C located at the end on the second end surface 4b side thereof. Similarly, the positive electrodes are exposed on the top surface of the batteries C located at the end on the first end surface 14a side of the battery block 1C, and the negative electrodes are exposed on the top surface of the batteries C located at the end on the second end surface 14b side thereof. That is, in the battery block 1A and the battery block 1C, the positive electrodes of the batteries C are all exposed on the top surface in the same end surface (the first end surface 4a, 14a), and the negative electrodes of the batteries C are all exposed on the top surface in the other end surface (the second end surface 4b, 14b). Although not shown, the orientation of the battery blocks 1A and 1C may be reversed from that shown in FIG. 7B. That is, as viewed in FIG. 7B, the battery blocks 1A and 1C are coupled in a manner in which the second end surfaces 4b and 14b of the battery blocks 1A and 1C are located on the right side, and the first end surfaces 4a and 14a of the battery blocks 1A and 1C are located on the left side. A specific example of the coupling part is described later.

In the case of series connection, the battery block 1 is rotated by 180°. Battery block 1A has the same orientation as battery block 1 shown in FIG. 1A. On the other hand, the battery block 1B coupled with the battery block 1A is rotated by 180° on a plane defined by the P axis and the Q axis. That is, when the longitudinal direction R of the battery is vertical, the battery block 1B is in a state of being rotated by 180° about the vertical axis at the center. When the battery blocks 1A and 1B are coupled, as viewed in FIG. 7C, the first end surface 4a of the battery block 1A and the second end surface 14b of the battery block 1B are located on the right side, and the second end surface 4b of the battery block 1A and the first end surface 14a of the battery block 1B are located on the left side. Although not shown, the orientation of the battery blocks 1A and 1B may be reversed from that of FIG. 7C. At this time, the positive electrodes are exposed on the top surface of the batteries C located at the end on the first end surface 4a side of the battery block 1A, and the negative electrodes are exposed on the top surface of the batteries C located at the end on the second end surface 4b side thereof. On the other hand, the negative electrodes are exposed on the top surface of the batteries C located at the end on the second end surface 14b side of the battery block 1B, and the positive electrodes are exposed on the top surface of the batteries C located at the end on the first end surface 14a side of the battery block 1B. That is, in the battery block 1A and the battery block 1B, the positive electrodes and the negative electrodes of the batteries C are exposed on the top surface in the same end surface (the first end surface 4a, the second end surface 14b), and the negative electrodes and the positive electrodes of the batteries C are exposed on the top surface in the other end surface (the second end surface 4b, the first end surface 14a) .

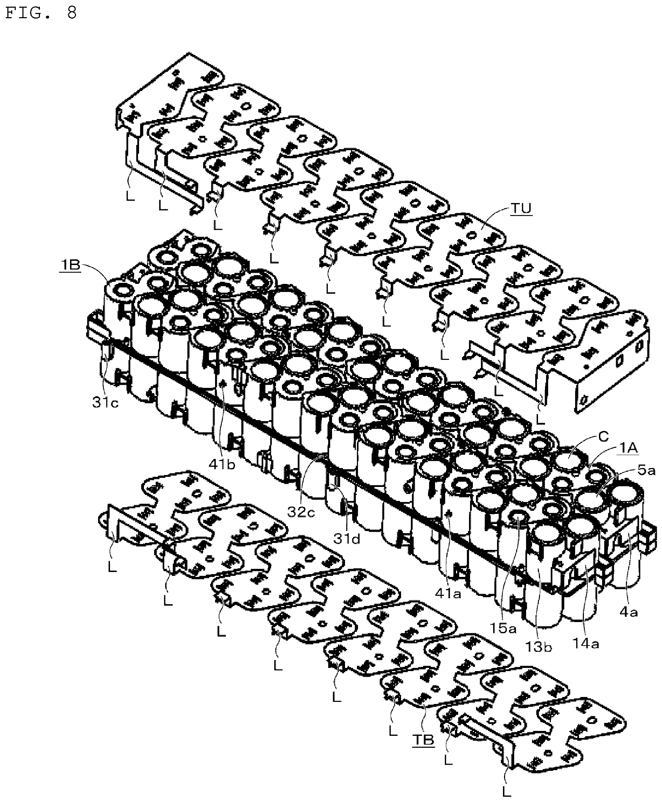

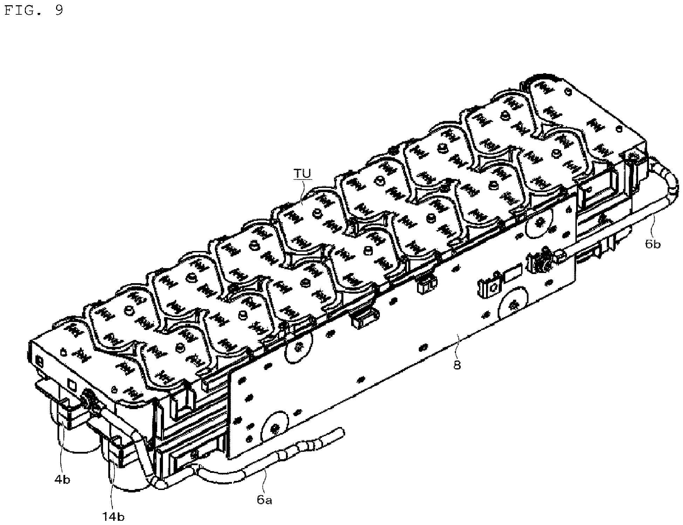

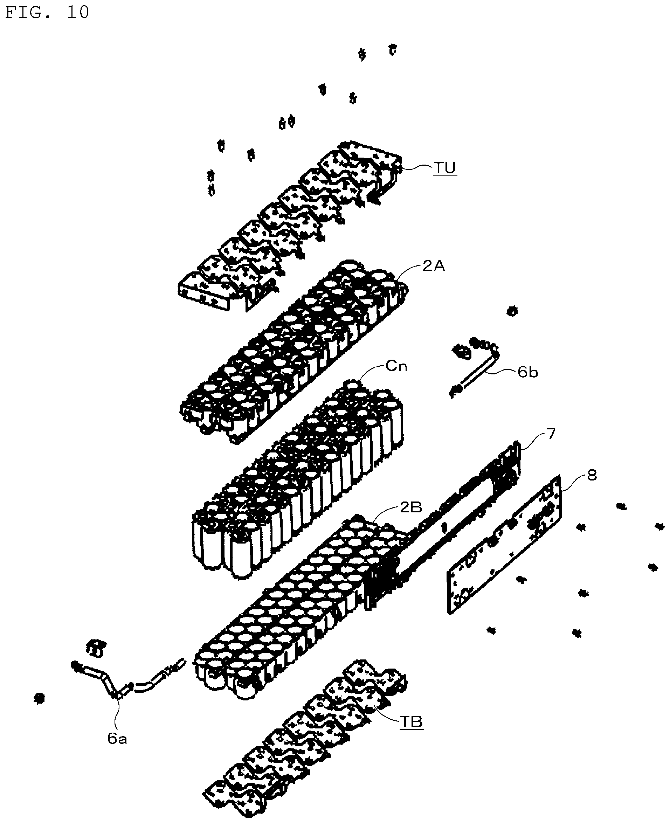

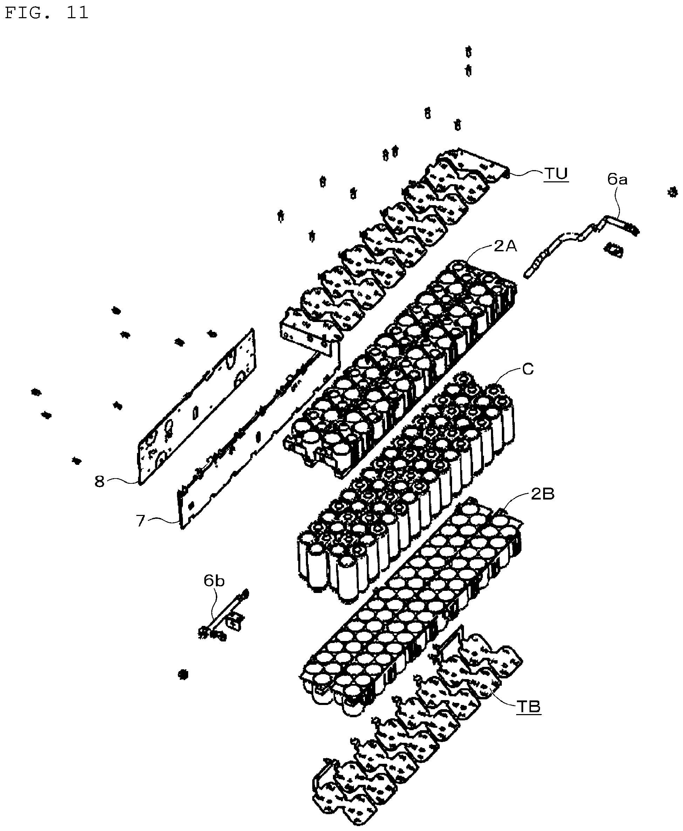

FIG. 8 is a partial exploded perspective view of the battery pack device in parallel connection, FIG. 9 is a perspective view of the battery pack device in parallel connection, FIG. 10 is an exploded perspective view of an example of a battery pack device in parallel connection, and FIG. 11 is an exploded perspective view of the battery pack device in parallel connection shown in FIG. 10 as viewed from a different direction.

The plurality of connection electrodes are welded to battery electrodes exposed on the top surface 5a of the battery block 1A and the top surface 15a of the battery block 1C which are coupled. The connection electrodes provided on the top surface are welded to the battery electrodes in the same relationship as in FIG. 4A described above. The plurality of connection electrodes on the top surface are referred to as a top surface connection electrode group TU. Further, the plurality of connection electrodes are welded to the battery electrodes exposed on the bottom surface. The connection electrodes provided on the bottom surface are welded to the battery electrodes in the same relationship as in FIG. 4B described above. The plurality of connection electrodes on the bottom surface are referred to as a bottom surface connection electrode group TB.

Further, a control board bracket 7 is attached to a mounting boss provided on the side surface of the battery pack holder 2, and a control board 8 is attached to the control board bracket 7. The control board bracket 7 is an auxiliary component for attaching the control board 8, and the control board 8 may be directly attached to the side surface of the battery pack holder 2.

A circuit for controlling the battery pack device is mounted on the control board 8. As shown in FIG. 8, the top surface connection electrode group TU and the bottom surface connection electrode group TB are integrally provided with lead parts L for connection, and a tip of each lead part L is soldered to a predetermined connection location of the control board 8. In the parallel connection, because the connection electrodes have a relationship of connecting both batteries of the two battery blocks 1A and 1C, one control board may be provided on one side surface of the battery blocks 1A and 1C. Further, even if the number of parallel connection is increased, only one control board needs to be placed on one side, and there is an advantage that the number of control boards does not change or the size of the control board does not change.

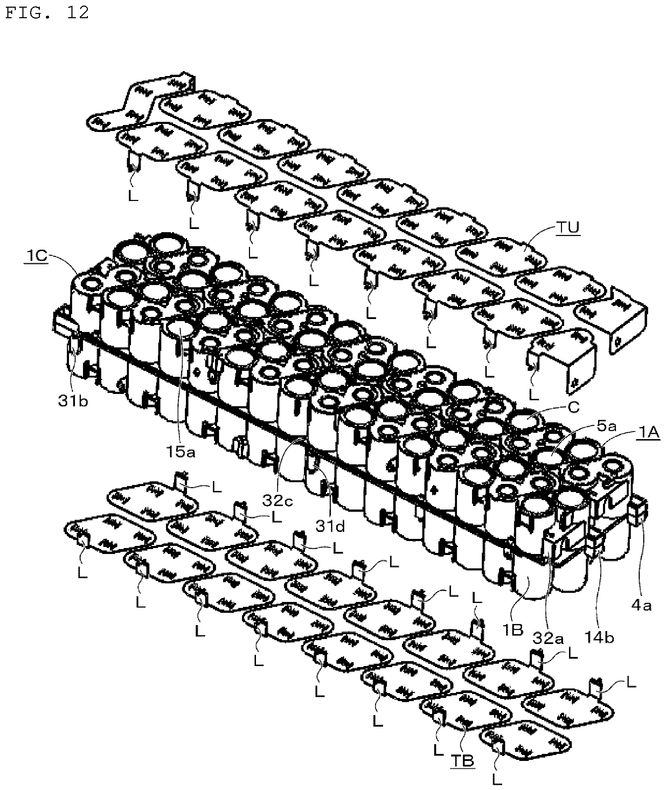

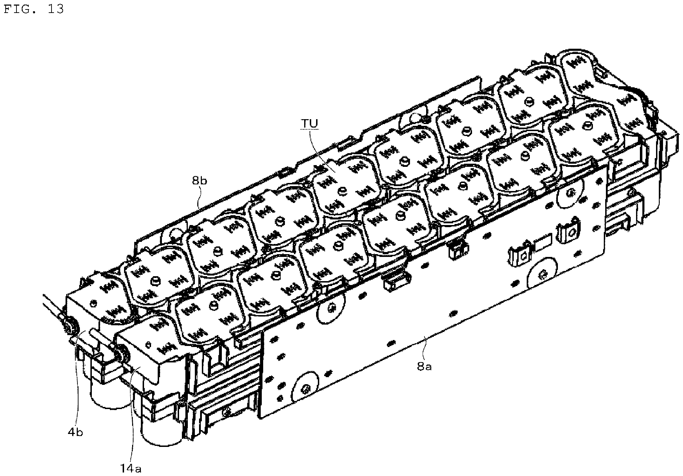

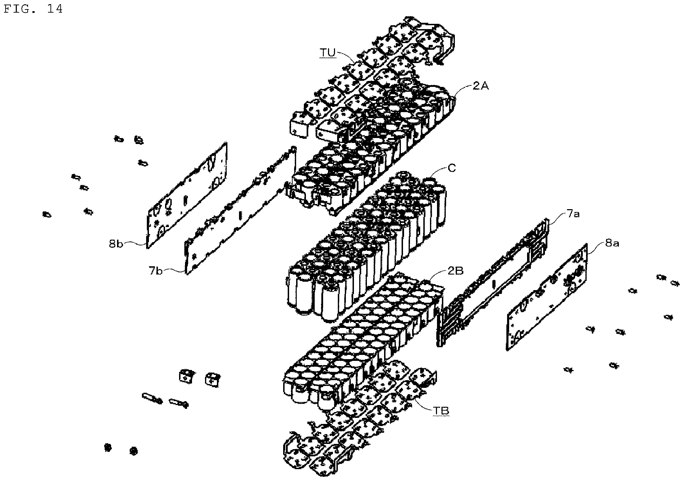

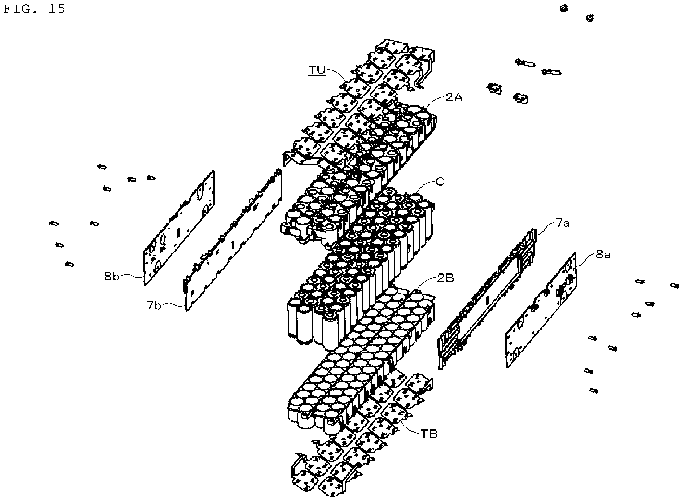

FIG. 12 is a partial exploded perspective view of the battery pack device in series connection, FIG. 13 is a perspective view of the battery pack device of series connection, and FIG. 14 is an exploded perspective view of an example of the battery pack device in series connection, and FIG. 15 is an exploded perspective view of the battery pack device in series connection shown in FIG. 14 seen from a different direction. The difference between the battery pack devices of FIGS. 14 and 15 is that sides from which the positive and negative outputs are taken out are different.

The plurality of connection electrodes are welded to the battery electrodes exposed on the top surface 5a of the battery block 1A and the top surface 15a of the battery block 1B which are coupled. The connection electrodes provided on the top surface are welded to the battery electrodes in the same relationship as in FIG. 2A described above. The plurality of connection electrodes on the top surface are referred to as a top surface connection electrode group TU. Further, the plurality of connection electrodes are welded to the battery electrodes exposed on the bottom surface. The connection electrodes provided on the bottom surface are welded to the battery electrodes in the same relationship as in FIG. 2B described above. The plurality of connection electrodes on the bottom surface are referred to as a bottom surface connection electrode group TB.

Further, the control board brackets 7a and 7b are attached to the mounting bosses provided on both side surfaces of the battery pack holder 2, and the control boards 8a and 8b are attached to the control board brackets 7a and 7b. A circuit for controlling the battery pack device is mounted on the control boards 8a and 8b. As shown in FIG. 12, each connection electrode of the top surface connection electrode group TU and each connection electrode of the bottom surface connection electrode group TB are integrally provided with the lead part L for connection, respectively, and the tip of the lead part L is soldered to a predetermined connection location of the control board 8. In series connection, the control boards 8a and 8b need to be provided on the respective side surfaces of the battery blocks 1A and 1B.

A control circuit mounted on each of the control boards 8, 8a, 8b controls charging and discharging of the battery. Electronic components for this control are mounted. Further, the control circuit also includes a protection circuit that detects each battery voltage and shuts off the charge and discharge current. The protection circuit turns off a switching element that interrupts the discharge current when any of the battery voltages becomes lower than the minimum voltage to interrupt the discharge current. When any of the battery voltages becomes higher than the maximum voltage, a switching element that stops charging is turned off to stop charging. Furthermore, a temperature detection circuit for detecting an abnormal temperature of the battery is also provided. The temperature detection circuit detects that the temperature of the battery detected by the temperature sensor has risen abnormally, and controls the charge and discharge current of the battery, or controls such as stopping charging and discharging.

The battery pack device in parallel connection (FIG. 9) or the battery pack device in series connection (FIG. 13) is accommodated in an outer case. Although not shown, the outer case is a metal box-shaped case. The outer case is not limited to metal, but may be made of resin, for example.

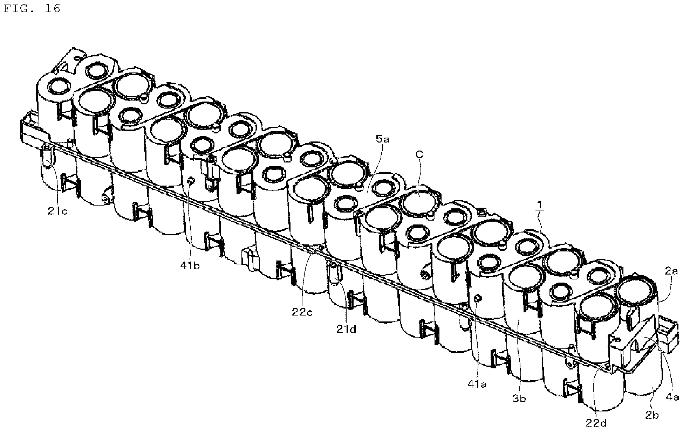

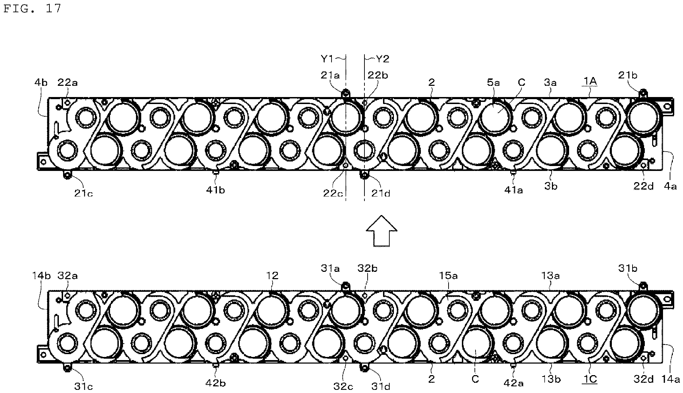

The coupling of the battery block 1 is described. As shown in FIGS. 16 and 17, and other drawings, projections 21a, 21b, 21c, and 21d as first coupling members and recesses 22a, 22b, 22c, and 22d as second coupling members are integrally provided near a boundary position between the upper and lower holders of the battery pack holder 2. FIG. 17 is a view seen from the top surface side of the battery blocks 1A and 1C coupled for parallel connection. The battery block 1C (and the battery block 1B) also has projections 31a, 31b, 31c, and 31d and recesses 32a, 32b, 32c, and 32d, similarly to the battery block 1A. As an example, the projections 21a to 31d are projections each having a substantially semicircular section in which a screw hole is formed in the long-side direction of the battery C, and the recesses 22a to 32d are plate-like portions in each of which a screw hole is formed. Fitting the projections 21a to 31d and the recesses 22a to 32d specifically means that the positions of these screw holes match and mounting screws (not shown) are inserted into the screw holes. In FIG. 16, the projections 21c and 21d are provided below the center line of the battery pack holder 2 in the height direction, that is, below the boundary between the upper and lower holders. The projections 21a, 21b, 31a, 31b, 31c, 31d are also provided below the center line of the battery pack holder 2 in the height direction.

Further, the battery pack holder 2 of the battery block 1A is provided with board mounting bosses 41a and 41b. Similar to the battery block 1A, the battery block 1C is provided with board mounting bosses 42a and 42b. The board mounting bosses 41a and 41b are provided on the side surface 3b facing the battery block 1C when the battery blocks are connected in parallel. Therefore, after the battery blocks are connected in parallel, the board mounting bosses 42a and 42b on the side surface of the battery block 1C are exposed, the control board bracket 7 is attached using the board mounting bosses 42a and 42b, and further, the control board 8 is attached to the control board bracket 7. In parallel connection, only one control board 8 may be provided.

The projection 21a and the recess 22c are provided on a first line Y1 (see FIG. 17) orthogonal to the long-side direction of the battery block 1A, and similarly, the projection 21d and the recess 22b are provided on a second line Y2 (see FIG. 17) orthogonal to the long-side direction of the battery block 1A. However, the projections 21a and 21d are formed on different side surfaces of the battery pack holder 2, and the recesses 22b and 22c are also formed on different side surfaces of the battery pack holder 2. On a plane formed by the long-side direction and the short-side direction of the battery block 1A, assuming that a line including the rotation center in rotating the battery block 1A and orthogonal to the long-side direction as a reference line, the first line and the second line have an offset that is equal in a reverse direction, with respect to the reference line.

Further, in the vicinity of the first end surface 4a of the battery block 1A, the projection 21b and the recess 22d are provided on a line orthogonal to the long-side direction of the battery block 1A. Further, in the vicinity of the second end surface 4b of the battery block 1A, the projection 21c and the recess 22a are provided on a line orthogonal to the long-side direction of the battery block 1A. However, the projection 21b and the projection 21c are formed on different side surfaces of the battery pack holder 2, and the recesses 22a and 22d are also formed on different side surfaces of the battery pack holder 2. These positional relationships also have the same offset with respect to the reference line.

The other battery blocks 1B and 1C coupled to the battery block 1A also have the same configuration as that of the battery block 1A described above. As shown in FIG. 17, in the case of parallel connection, the battery block 1C having the same orientation is coupled to the battery block 1A. Therefore, the projection 21c is fitted to the recess 32a, the projection 31a is fitted to the recess 22c, the projection 21d is fitted to the recess 32b, and the projection 31b is fitted to the recess 22d.

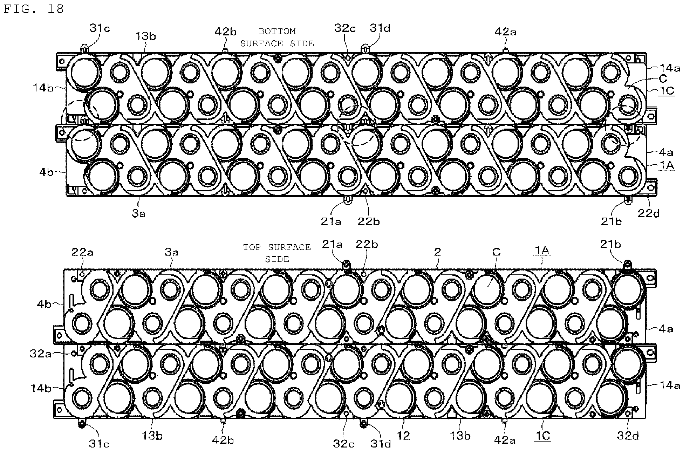

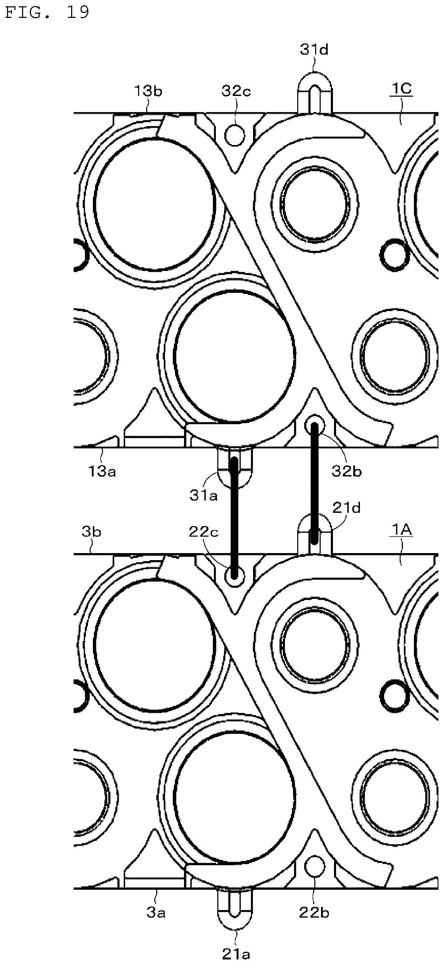

FIG. 18 shows a battery pack device in parallel connection. FIG. 18 includes both a drawing viewed from the bottom surface side and a drawing viewed from the top surface side. FIG. 19 is an enlarged view of the fitting portion viewed from the bottom surface side, in which the projection 21d of the battery block 1A is fitted in the recess 32b of the battery block 1C, and the projection 31a of the battery block 1C is fitted to the recess 22c of the battery block 1A.

Because the projections 21a to 31d are provided and the recesses 22a to 32d are provided in the above-described positional relationships, when the battery block 1C is rotated by 180° in the plane formed by the long-side direction and the short-side direction, the projections 31a to 31d are at the same positions as the positions of the projections before the rotation. That is, the projection 31d comes to the position of the projection 31a, and the projection 31c comes to the position of the projection 31b. Similarly, the positional relationships of the recesses are the same as that before the rotation. As described above, in the case of configuring the serial connection, the battery block 1B obtained by rotating the battery block 1C by 180° is connected to the battery block 1A. Also in this case, the two battery blocks can be coupled without any trouble.

In FIG. 17, if the battery block 1C is turned upside down, the projections are located above the center line and the heights of the projections and the recesses do not match, causing the projections and the recesses not being able to fit together. Accordingly, the battery blocks 1A and 1C cannot be coupled. Therefore, incorrect coupling of the battery blocks can be prevented.

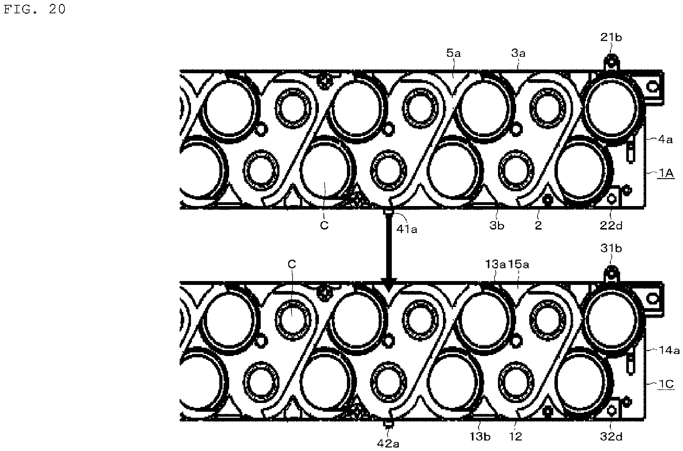

In the case of parallel connection, as shown in FIG. 17, the fact that the arrangement of the batteries C is shifted by a half cycle between the battery blocks 1A and 1C can prevent the board mounting bosses 41a and 41b of the battery block 1A from colliding with the battery pack holder 2 of the battery block 1C when the battery blocks are coupled. As shown in an enlarged view in FIG. 20, for example, the board mounting boss 41a enters a valley of the arrangement of the batteries C of the battery block 1C. Furthermore, in the case of series connection, because the battery block is rotated by 180°, the board mounting boss appears on the outside, and accordingly, there is no risk of interference and also the control board can be mounted on the respective side surfaces of the two battery blocks.

As described above, assuming that the longitudinal direction R of the battery is vertical, the battery pack device according to the present invention can realize parallel connection and serial connection without changing the arrangement configuration of the battery block, by rotating the battery block by 180° about the vertical axis at the center thereof. Further, in the prior art, a connection is made through a component such as an end plate, or a connection is made through a control board, whereas in the present invention, a battery connection can be formed only with the connection electrodes, and therefore, the number of components can be reduced. Furthermore, the present invention has a mounting boss that can mount control boards of the same size, that is, one control board can be mounted on one side of the battery block in parallel connection, and two mounting boards can be mounted on both sides of the battery block in series connection. The board mounting bosses are arranged at positions that do not prevent fitting of the battery blocks to each other when the battery blocks are connected in parallel.

### <3. Modification>

The present invention is not limited to the above-described embodiment of the present invention, and various modifications and applications are possible without departing from the gist of the present invention.

For example, numerical values, structures, shapes, materials, raw materials, manufacturing processes, and the like mentioned in the above-described embodiment and example are merely examples, and different numerical values, structures, shapes, materials, raw materials, manufacturing processes, and the like may be used, as necessary.

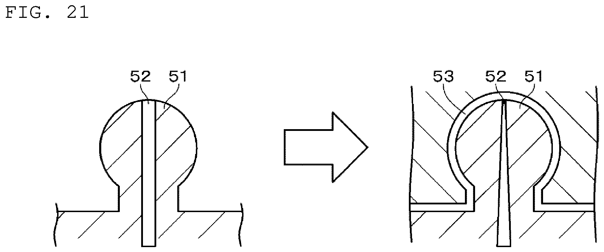

For example, as the configuration of the fitting part for coupling the battery blocks to each other, a configuration utilizing elasticity of synthetic resin is possible. As shown in FIG. 21, a projection 51 having a slit 52 and having a substantially spherical shape or a substantially circular section and having a constriction is used. On the other hand, a recess 53 having an opening slightly smaller than a diameter of the projection 51 and having a constriction is provided. By narrowing the slit 52, the projection 51 can be fitted into the recess 53. The fitted state can be maintained by elasticity of the synthetic resin of the battery pack holder.

### <4. Application examples>

Hereinafter, application examples of the battery pack device are described. The application example of the battery pack device is not limited to the application examples described below.

### "Power storage system in a house as an application example"

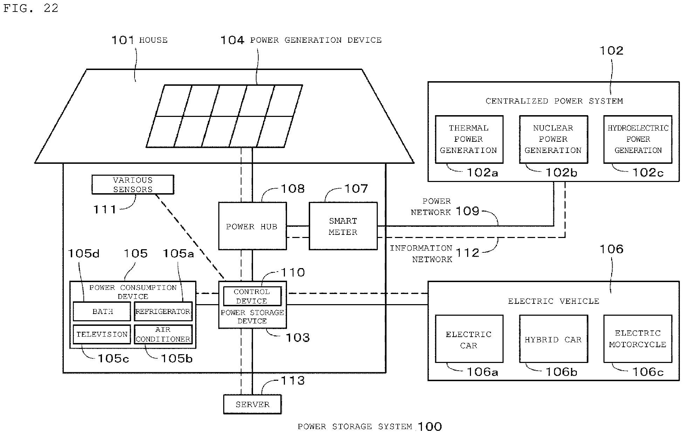

An example in which the present invention is applied to a power storage system for a house is described with reference to FIG. 22. For example, in a power storage system 100 for a house 101, electric power is supplied from a centralized power system 102 such as thermal power generation 102a, nuclear power generation 102b, and hydroelectric power generation 102c via a power network 109, an information network 112, a smart meter 107, a power hub 108, and the like, to a power storage device 103. At the same time, electric power is supplied to the power storage device 103 from an independent power source such as a power generation device 104. The electric power supplied to the power storage device 103 is stored. Then, electric power used in the house 101 is supplied using the power storage device 103. The similar power storage system can be used not only for the house 101 but also for a building.

The house 101 is provided with the power generation device 104, a power consumption device 105, the power storage device 103, a control device 110 that controls each device, the smart meter 107, and sensors 111 that acquires various kinds of information. The respective devices are connected by the power network 109 and the information network 112. A solar cell, a fuel cell, a wind turbine, or the like is used as the power generation device 104, and the generated power is supplied to the power consumption device 105 and/or the power storage device 103. The power consumption device 105 includes a refrigerator 105a, an air conditioner 105b, a television receiver 105c, a bath 105d, and the like. Further, the power consumption device 105 includes an electric vehicle 106. The electric vehicle 106 includes an electric car 106a, a hybrid car 106b, and an electric motorcycle 106c. The electric vehicle 106 may be an electric assist bicycle or the like.

The power storage device 103 is constituted of a secondary battery or a capacitor. For example, the power storage device is constituted of a lithium ion secondary battery. The lithium ion secondary battery may be a stationary type or may be used in the electric vehicle 106. The battery pack device of the present invention described above can be applied to this power storage device 103. The smart meter 107 has a function of detecting an amount of commercial power consumption and transmitting the detected amount of consumption to the power company. The power network 109 may be any one or a combination of a direct current (DC) power supply, an alternating current (AC) power supply, and a contactless power supply.

The various sensors 111 include, for example, a motion sensor, an illuminance sensor, an object detection sensor, a power consumption sensor, a vibration sensor, a contact sensor, a temperature sensor, an infrared sensor, and the like. The information acquired by the various sensors 111 is transmitted to the control device 110. Using the information from the sensors 111, the weather condition, the condition of a person, and the like can be grasped, so that the power consumption device 105 can be automatically controlled to minimize energy consumption. Further, the control device 110 can transmit information regarding the house 101 to the external power company or the like via the Internet.

The power hub 108 performs processing such as branching of power lines and DC/AC conversion. As a communication method of the information network 112 connected to the control device 110, there is a method of using a communication interface such as a Universal Asynchronous Receiver Transmitter (UART: transceiver circuit for asynchronous serial communication), or a method of using a sensor network based on a wireless communication standard such as Bluetooth (registered trademark), ZigBee (registered trademark), and Wi-Fi. The Bluetooth (registered trademark) method is applied to multimedia communication and can perform one-to-many connection communication. ZigBee (registered trademark) uses a physical layer of the Institute of Electrical and Electronics Engineers (IEEE) 802.15.4. IEEE 802.15.4 is the name of a short-range wireless network standard called a Personal Area Network (PAN) or a Wireless (W) PAN.

The control device 110 is connected to an external server 113. This server 113 may be managed by any of the house 101, the power company, and the service provider. The information transmitted and received by the server 113 is, for example, power consumption information, life pattern information, power charge, weather information, natural disaster information, and information on power transactions. These pieces of information may be transmitted and received from the power consumption device at home (for example, a television receiver), or may be transmitted and received from a device outside the home (for example, a mobile phone). These pieces of information may be displayed on a device having a display function, for example, a television receiver, a mobile phone, a personal digital assistant (PDA) or the like.

The control device 110 that controls each unit includes a central processing unit (CPU), a random access memory (RAM), a read only memory (ROM), and the like, and is accommodated in the power storage device 103 in this example. The control device 110 is connected to the power storage device 103, the power generation device 104, the power consumption device 105, the various sensors 111, and the server 113 by the information network 112, and has a function of adjusting, for example, the amount of commercial power consumption and the amount of power generation. In addition to the above, a function of conducting power transaction in the power market may be provided.

As described above, not only the centralized power system 102 such as the thermal power generation 102a, the nuclear power generation 102b, and the hydroelectric power generation 102c, but also the power generated by the power generation device 104 can be stored in the power storage device 103. The power generation device 104 may be renewable energy such as solar power generation or wind power generation. According to the present application example, even if the generated electric power of the power generation device 104 fluctuates, the control can be performed to keep the amount of electric power transmitted to the outside constant or to discharge the electric power, as necessary. For example, the electric power can be used in a manner in which the electric power obtained by solar power generation is stored in the power storage device 103, and meanwhile, the midnight power at night during which charge is low is stored in the power storage device 103, and the electric power stored in the power storage device 103 is discharged during a time period in daytime during which charge is high.

In this example, the example in which the control device 110 is accommodated in the power storage device 103 has been described, however, the control device 110 may be stored in the smart meter 107 or may be configured independently. Furthermore, the power storage system 100 may be used for a plurality of households in an apartment house or for a plurality of detached houses.

### "Power storage system in a vehicle as an application example"

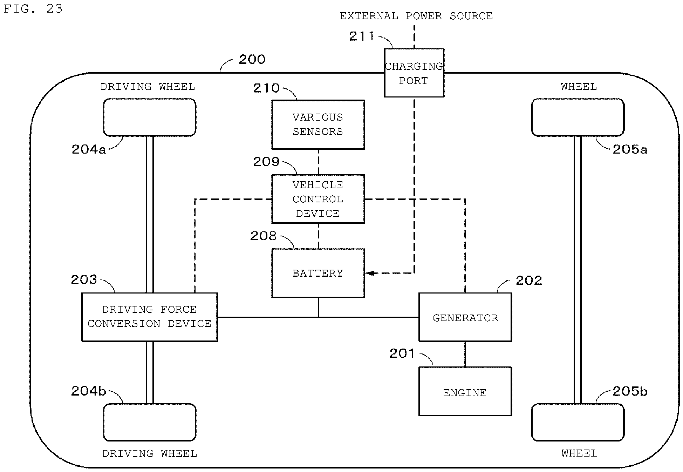

An example in which the present invention is applied to a power storage system for a vehicle is described with reference to FIG. 23. FIG. 23 schematically shows an example of a configuration of a hybrid vehicle that employs a series hybrid system to which the present invention is applied. The series hybrid system is a vehicle that travels on a power/driving force conversion device using electric power generated by a generator driven by an engine or electric power once stored in a battery.

The hybrid vehicle 200 is mounted with an engine 201, a generator 202, a power/driving force conversion device 203, a driving wheel 204a, a driving wheel 204b, a wheel 205a, a wheel 205b, a battery 208, a vehicle control device 209, various sensors 210, and a charging port 211. The above-described power storage device of the present invention is applied to the battery 208. One or more power storage devices are applied.

The hybrid vehicle 200 travels using the power/driving force conversion device 203 as a power source. An example of the power/driving force conversion device 203 is a motor. The power/driving force conversion device 203 operates by the electric power of the battery 208, and rotational force of the power/driving force conversion device 203 is transmitted to the driving wheels 204a, 204b. By using direct current-alternating current (DC-AC) or reverse conversion (AC-DC conversion) at necessary places, the power/driving force conversion device 203 can be applied to either an AC motor or a DC motor. The various sensors 210 control the engine speed via the vehicle control device 209, and control the opening of a not-shown throttle valve (throttle opening). The various sensors 210 include a speed sensor, an acceleration sensor, an engine speed sensor, and the like.

The rotational force of the engine 201 is transmitted to the generator 202, and the electric power generated by the generator 202 using the rotational force can be stored in the battery 208.

When the hybrid vehicle decelerates by a not-shown braking mechanism, resistance force at the time of deceleration is applied to the power/driving force conversion device 203 as rotational force, and the regenerative electric power generated by the power/driving force conversion device 203 by this rotational force is accumulated in the battery 208.

The battery 208 can be connected to an external power source of the hybrid vehicle to receive electric power from the external power source using the charging port 211 as an input port, and can store the received electric power.

Although not shown, an information processing device may be provided that performs information processing on vehicle control based on information regarding the secondary battery. As the information processing apparatus as such, for example, there is an information processing apparatus that displays a remaining battery level based on information regarding a remaining battery level.

In the above, the description has been made on the series hybrid vehicle as an example which travels by the motor, using electric power generated by the generator driven by an engine or electric power once stored in a battery. However, the present invention can be effectively applied for a parallel hybrid vehicle that uses output from both an engine and a motor as drive sources, and in which three modes including traveling only with the engine, traveling only with the motor, and traveling with the engine and the motor are switched as appropriate. Furthermore, the present invention can be effectively applied to a so-called electric vehicle that travels only by a drive motor and without using an engine.

### DESCRIPTION OF REFERENCE SYMBOLS

1, 1A, 1B, 1C: Battery block
2: Battery pack holder
3a, 3B: Side surface
4a, 4b: End surface
5a: Top surface
5b: Bottom surface
7, 7a, 7b: Control board bracket
8, 8a, 8b: Control board
21a to 21d: Projection
22a to 22d: Recess
31a to 31d: Projection
32a to 32d: Recess
41a, 41b, 42a, 42b: Mounting boss

## Claims

1. A battery block comprising:
a plurality of batteries arranged in at least one row;
a support body that holds the plurality of batteries; and
a coupling member provided on the support body,
wherein the coupling member is provided so as to cooperate with another coupling member formed on a support body of another battery block to couple the battery blocks with each other and so as to locate at an equal position after the battery block is rotated in an equal plane, and
wherein the battery block is configured to switch between serial connection and parallel connection according to whether the battery block is rotated or not.

2. The battery block according to claim 1, wherein the plurality of batteries have positive electrodes and negative electrodes alternately exposed.

3. The battery block according to claim 1 or 2, wherein the batteries whose number of pieces is even are arranged in one row.

4. The battery block according to any one of claims 1 to 3, wherein the battery arranged at one end of the one row and the battery arranged at another end of the one row have electrodes exposed on an equal surface with different polarities.

5. The battery block according to any one of claims 1 to 4, wherein the coupling member includes a first coupling member having a projection formed on a side surface of the support body and a second coupling member having a recess formed on a side surface of the support body, and
wherein the battery blocks adjacent to each other can be coupled with each other by fitting the first coupling member and the second coupling member of the battery blocks adjacent to each other.

6. The battery block according to claim 5, wherein the first coupling member is provided on one side of a center line of the side surface of the support body.

7. A battery pack device, wherein a plurality of pieces of the battery blocks according to any one of claims 1 to 6 are provided, the battery blocks adjacent to each other are coupled by the coupling members of the battery blocks adjacent to each other, and a connection electrode that connects between the electrodes of the plurality of batteries is provided.

8. The battery pack device according to claim 7,
wherein, in an arrangement of the plurality of batteries, the positive electrodes and the negative electrodes are alternately exposed, and
wherein each of the positive electrodes and each of the negative electrodes are connected by the connection electrode to configure serial connection of the plurality of batteries.

9. The battery pack device according to claim 7 or 8, wherein the battery blocks are connected to each other in series by the connection electrode.

10. The battery pack device according to claim 7 or 8, wherein the battery blocks are connected to each other in parallel by the connection electrode.

11. The battery pack device according to claim 9, wherein the plurality of battery blocks connected in series are provided with two or more control boards on different surfaces of the plurality of battery blocks.

12. The battery pack device according to claim 10, wherein the plurality of battery blocks connected in parallel are provided with one control board on one surface of the plurality of battery blocks.

13. The battery pack device according to claim 12, wherein the control board is configured such that a mounting boss of the control board is arranged in a gap between batteries of another battery block to be coupled.

14. A power system, wherein the battery pack device according to claim 7 is charged by a power generation device that generates power from renewable energy.

15. A power system comprising the battery pack device according to claim 7, and supplying electric power to an electronic device connected to the battery pack device.

16. An electric vehicle comprising: a conversion device that receives power supply from the battery pack device according to claim 7 and converts the power into driving force of a vehicle; and a control device that performs information processing regarding vehicle control based on information on the battery pack device.

17. A power system comprising a power information transmission and reception unit that transmits and receives a signal to and from another device via a network,
wherein charging and discharging of the battery pack device according to claim 7 is performed based on information received by the power information transmission and reception unit.

18. A power system, wherein electric power is received from the battery pack device according to claim 7, or electric power is supplied from a power generation device or a power network to the battery pack device.
